# EUROPÄISCHE PATENTSCHRIFT

(11) **EP 2 418 361 B1**
(45) Veröffentlichungstag und Bekanntmachung des Hinweises auf die Patenterteilung: **23.09.2015**
(21) Anmeldenummer: 11176958.4
(22) Anmeldetag: 09.08.2011
(51) Int. Cl.: F01M 13/04, E03B 7/12, F02M 25/06, H05B 3/40, H05B 3/58, F16L 53/00

(54) **Fluidleiteinrichtung**
Fluid guidance device
Dispositif d'acheminement de fluide

(30) Priorität: 09.08.2010 DE 102010033757
(43) Veröffentlichungstag der Anmeldung: 15.02.2012
(73) Patentinhaber: DBK David + Baader GmbH, Nordring 26 76761 Rülzheim (DE)
(72) Erfinder: Gschwind, Thomas, 67098 Bad Dürkheim (DE)
(74) Vertreter: Winter, Brandl, Fürniss, Hübner, Röss, Kaiser, Polte - Partnerschaft mbB

(56) Entgegenhaltungen:
- EP-A1- 1 557 601
- EP-A1- 1 674 678
- WO-A1-99/47805
- US-A1- 2008 099 000

## Beschreibung

Die Erfindung betrifft eine Fluidleiteinrichtung, insbesondere eine Blowby-Einrichtung gemäß dem Oberbegriff des Patentanspruches 1.

Eine derartige Blowby-Einrichtung ist in den Druckschriften EP 1 164 264 B1, EP 1 375 997 B1und EP 1 557 601 A1 der Anmelderin erläutert. Demgemäß füllt sich beim Betrieb eines Verbrennungsmotors aufgrund von Undichtigkeiten im Bereich der Kolbenabdichtung das Kurbelgehäuse mit Verbrennungsgasen, die sich mit Öldämpfen mischen und allgemein als Blowby-Gase bezeichnet werden. Durch den Hub der Kolben des Verbrennungsmotors werden diese Blowby-Gase zusätzlich mit Druck beaufschlagt, es entsteht ein pulsierender Volumenstrom. Da dieser schädliche Kohlenwasserstoffverbindungen enthält und darüber hinaus der Volumenstrom vergleichsweise hoch ist - selbst bei optimaler Abdichtung der Kolbenringe kann der Blowby-Gasvolumenstrom etwa 0,5 bis 2% des gesamten Gasvolumenstroms betragen - sind Maßnahmen erforderlich, um ein Entweichen dieser Gase an die Umgebung zu vermeiden.

Hierzu ist es allgemeiner Stand der Technik, eine unterdruckgeregelte Kurbelgehäuseentlüftung vorzusehen. Bei dieser wird das aus dem Kurbelgehäuse strömende Blowby-Gas zunächst über eine Ölabscheidevorrichtung geführt, um dann ein Druckregelventil (Blowby-Ventil) zu passieren und an der Einleitstelle zur Nachverbrennung in den Ansaugtrakt des Verbrennungsmotors zu gelangen.

Die Ölabscheidevorrichtung ist häufig ein Zyklonabscheider, aus diesem wird der Großteil des Öls in die Ölwanne zurückgeführt.

Das Druckregelventil hält den Unterdruck im Kurbelgehäuse möglichst konstant und begrenzt diesen. Bei Motorstillstand ist das Druckregelventil geöffnet. Im Leerlauf- oder Schubbetrieb, welcher durch Unterdruck im Ansaugrohr und wenig Blowby-Gas gekennzeichnet ist, schließt das Druckregelventil. Bei höherer Last entsteht mehr Blowby-Gas, das Druckregelventil öffnet, um den Unterdruck etwa konstant zu halten.

Ein Problem besteht darin, dass insbesondere bei geringen Außentemperaturen die warmen Blowby-Gase mit der kalten Ansaugluft zusammen treffen und dann durch die schnelle Abkühlung im Bereich der Zusammenführung der beiden Gasströme der Einleitstelle eine Kondensation auftritt, was zu einer Vereisung in diesem Bereich führen kann. Ebenso ist eine Vereisung im Bereich des Druckregelventils möglich. Um eine derartige Vereisung in Komponenten, die vom Blowby-Gas durchströmt werden, zu vermeiden, werden diese über eine Heizung aufgewärmt. Derartige Lösungen sind bereits in der DE-AS 24 32 782, EP 1 314 869 B1 und der DE 195 18 712 A1 beschrieben. Diese Heizungen sind als herkömmliche elektrische Heizungen ausgeführt. Mit dem eingangs genannten Stand der Technik wird vorgeschlagen, PTC-Widerstandselemente als Heizelemente zu verwenden.

Das Aufheizen von Blowby-Gasen oder von diesen durchströmten Komponenten ist auch aus den Druckschriften US 4,922,882 und US 4,312,121 bekannt.

Ein Problem all dieser Lösungen besteht darin, dass beispielsweise bei Wartungsarbeiten am Motor vergessen werden kann, wieder alle Fluidverbindungen, insbesondere die das Kurbelgehäuse mit dem Ansaugtrakt verbindende Blowby-Leitung, anzuschließen. So kann beispielsweise die Verbindung zwischen dem Ansaugtrakt und dem Blowby-Heizer oder die Verbindung zwischen dem Kurbelgehäuse und dem genannten Heizer- diese Verbindung ist üblicher Weise durch einen Schlauch ausgebildet - getrennt bleiben. Durch diese versehentliche Trennung wird der Blowby-Gasvolumenstrom an die Umgebung abgegeben - dies ist im Hinblick auf eine mögliche Umweltverschmutzung zu vermeiden. Problematisch für die Funktion des Verbrennungsmotors ist auch, dass dann die Ansaugseite des Verbrennungsmotors "Falschluft" zieht und das Motormanagement nicht mehr abgasoptimiert arbeiten kann.

Die Erfindung soll jedoch nicht ausschließlich auf die Verwendung bei Blowby-Gasströmungspfaden beschränkt sein, sondern ist allgemein bei Fluidleiteinrichtungen einsetzbar. Entsprechende Probleme treten beispielsweise auch bei Kühlkreisläufen, Druckluftleitungen, SCR-Leitungen auf, bei denen ebenfalls die Möglichkeit einer fehlerhaften Montage von Kupplungselementen gegeben ist.

Demgegenüber liegt der Erfindung die Aufgabe zugrunde, eine Blowby-Einrichtung zu schaffen, durch die eine Umweltverschmutzung und/oder die Gefahr einer Beeinträchtigung der Funktion eines Verbrennungsmotors verringert ist.

Diese Aufgabe wird durch die Merkmale des Patentanspruches 1 gelöst.

Vorteilhafte Weiterbildungen der Erfindung sind Gegenstand der Unteransprüche.

Erfindungsgemäß ist die Blowby-Einrichtung mit zumindest einer elektrisch leitenden Einheit ausgeführt, die mittels eines Steckers elektrisch kontaktiert ist, der in ein Steckerteil der Einheit eingesetzt ist. Die Einrichtung hat des Weiteren einen zuströmseitigen und einen abströmseitigen Anschluss zum Anschließen an einen Fluid-Gasströmungspfad, insbesondere einen Blowby-Gasströmungspfad, wobei einem Anschluss ein Kupplungsstück zugeordnet ist, das in einer eine bestimmungsgemäße Funktion ermöglichenden Soll-Relativposition ein Sperrteil in eine Freigabeposition bewegt oder hält, in der der Stecker in das Steckerteil einsetzbar ist und das in einer von der Soll-Relativposition abweichenden Position das Sperrteil frei gibt, so dass dieses in seine Sperrstellung bewegbar ist.

Bei korrekter Verbindung des Kupplungsstücks mit der elektrisch leitenden Einheit wird somit ein Sperrteil aus dem Einschiebepfad für den Stecker heraus bewegt, so dass dieser in das Steckerteil eingesetzt werden kann, um die elektrisch leitende Einheit an ein Bordnetz des Fahrzeugs anzuschließen. Falls das Kupplungsstück nicht ordnungsgemäß mit der Einheit verbunden ist, ist das Einsetzen des Steckers und somit die elektrische Kontaktierung unmöglich - über das Bordmanagement kann dann eine geeignete Fehlermeldung abgegeben werden.

Die elektrisch leitende Einheit kann beispielsweise eine Heizeinheit zur Beheizung einer Einleitstelle eines Blowby-Gasstroms in einen Ansaugtrakt sein. Falls das Fahrzeug in Ländern mit einem wärmeren Klima, beispielsweise in Südeuropa verwendet wird, kann auf diese Einleitstellenheizung (Kaltlandvariante) verzichtet werden und die Heizeinheit durch ein in der Geometrie entsprechend ausgeformtes Kunststoffteil mit einem elektrischen Leiter ersetzt werden, das lediglich eine "Durchschleifung" bildet.

Bei einem Ausführungsbeispiel der Erfindung ist an der elektrisch leitenden Einheit im Bereich des Steckerteils eine Federzunge als Sperrteil ausgebildet, die durch einen Mitnehmer am Kupplungsstück in dessen Sollposition elastisch in die Freigabeposition bewegt ist. Selbstverständlich ist auch eine kinematische Umkehr möglich, bei der der Mitnehmer an der Einheit und die Federzunge am Kupplungsstück ausgeführt ist.

Bei diesen Varianten wird somit durch Ansetzen der elektrisch leitenden Einheit an das Kupplungsstück die Federzunge aus dem Einschubweg für den Stecker heraus bewegt.

Um einen Bruch der Federzunge zu vermeiden, ist dieser ein die Auslenkung begrenzender Anschlag zugeordnet, auf den die Federzunge bei einer übermäßigen Auslenkung aufläuft.

Gemäß einem Ausführungsbeispiel ist der Mitnehmer zum Betätigen des Sperrelementes am Kupplungsstück als ein in Verbindungs- oder Kupplungsrichtung schräg angestellter Vorsprung ausgebildet, der mit einem Endabschnitt des Sperrteils, beispielsweise der Federzunge überlappt und dieses beim Ansetzen der elektrisch leitenden Einheit an das Kupplungsstück in Richtung seiner Freigabestellung bewegt.

Bei einer Variante der Erfindung ist das Kupplungsstück mit der elektrisch leitenden Einheit verrastet.

Bei einem Ausführungsbeispiel ist der Stecker mit einem Anschlag ausgeführt, der in der Sperrstellung auf das Sperrelement aufläuft, wobei in dieser Auflaufstellung weder eine thermische noch eine elektrische Kontaktierung erfolgt. Dieser Anschlag kann beispielsweise durch eine Ringschulter des Steckers ausgeführt sein.

Bei einem Ausführungsbeispiel der Erfindung bilden das Kupplungsstück und der Stecker in der Sollposition eine Hinterschneidung, die ein Lösen des Kupplungsstücks von der elektrisch leitenden Einheit bei eingesetztem Stecker unterbindet.

Eine Hinterschneidung kann beispielsweise durch eine quer oder schräg zur Kuppelrichtung verlaufende Ausnehmung des Kupplungsstücks gebildet sein, in die das Steckerteil abschnittsweise eintaucht. Das Hintergreifen des Steckerteils durch die Ausnehmung verhindert dann das Lösen der elektrisch leitenden Einheit vom Kupplungsstück.

Bei einem Ausführungsbeispiel der Erfindung ist das Kupplungsstück sauganlagenseitig, der weitere Anschluss motorseitig, vorzugsweise ölabscheiderseitig in einem Blowby-Gasströmungspfad angeordnet.

Der Anschluss der Fluid- oder Blowby-Gasleitung an den weiteren Anschluss erfolgt beispielsweise über einen Rohrstutzen, auf den ein Wellrohr aufgeschoben ist.

Bei einem Ausführungsbeispiel der Erfindung sind Heizelemente der Heizeinheit als PTC-Widerstandselemente ausgeführt.

Bevorzugte Ausführungsbeispiele der Erfindung werden im Folgenden anhand schematischer Zeichnungen näher erläutert. Es zeigen:
Figur 1 eine dreidimensionale Darstellung der wesentlichen Bauelemente einer erfindungsgemäßen als Blowby-Heizeinrichtung ausgeführten Fluidleiteinrichtung;
Figur 2 die Heizeinrichtung aus Figur 1 aus einem anderen Blickwinkel gesehen;
Figur 3 eine Einzeldarstellung eines Steckers aus Figur 1;
Figur 4 eine Einzeldarstellung einer Heizeinheit, die mit einem Kupplungsstück verrastet ist;
Figur 5 eine dreidimensionale Darstellung der montierten Heizeinrichtung und
Figur 6 die Heizeinrichtung gemäß Figur 5 aus einem anderen Blickwinkel.

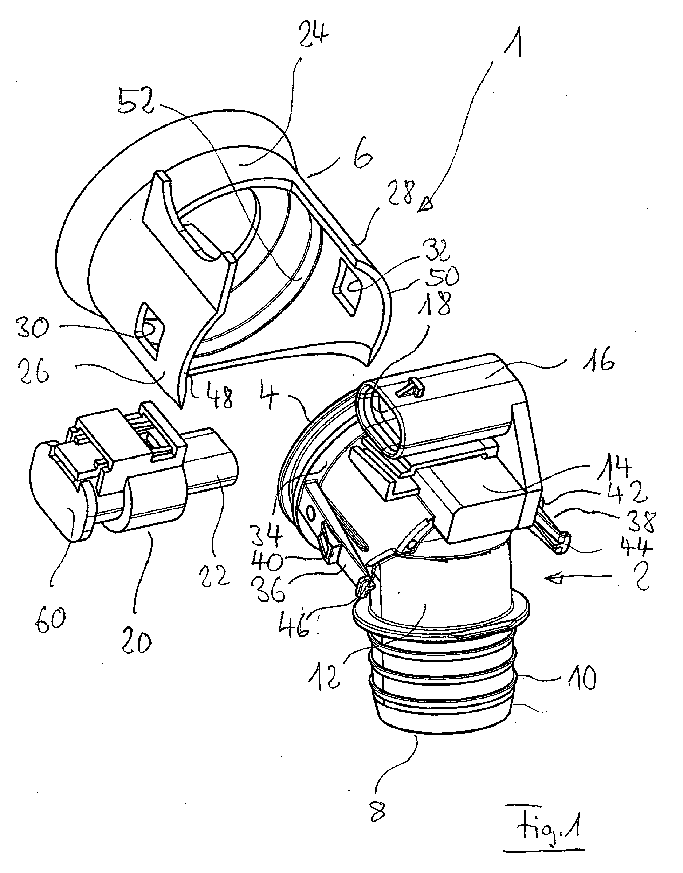

Bei Verbrennungsmotoren und Kolbenverdichtern kann es insbesondere beim Expansionshub vorkommen, dass Blowby-Gase über die Kolbenringe (Verdichtungsringe und Ölabstreifringe) in das Kurbelgehäuse des Verbrennungsmotors eintreten. Dabei kann es zum einen zu einer Schmierölverdünnung des im Kurbelgehäuse aufgenommenen Schmieröls kommen, zum anderen kann der durch den Hub der Kolben erhöhte Druck im Kurbelgehäuse den Wirkungsgrad des Verbrennungsmotors verringern. Um diese Nachteile zu beseitigen, ist es allgemein üblich, das Kurbelgehäuse über eine Blowby-Leitung mit dem Ansaugtrakt, beispielsweise einem Reinluftrohr vor einem Abgasturbolader zu verbinden, so dass die Blowby-Gase aus dem Kurbelgehäuse abgezogen und der Ansaugluft beigemischt werden. In der Blowby-Leitung ist dabei üblicherweise ein Druckregelventil vorgesehen, das im Leerlauf oder im Schiebebetrieb des Motors die Blowby-Leitung absperrt. Der im Blowby-Gas enthaltene Ölanteil wird über eine Ölabscheider, beispielsweise einem Zyklonabscheider abgetrennt und über einen Ölrücklaufkanal zurückgeführt. Zur Vermeidung der eingangs beschriebenen Vereisungsproblematik wird der Bereich, in dem die Blowby-Leitung in den Saugtrakt einmündet, über eine in Figur 1 dargestellte Blowby-Heizeinrichtung 1 erwärmt.

Diese besteht im Prinzip aus einer Heizeinheit 2, die vom Blowby-Gas durchströmt ist und mit einem sauganlagenseitigen Anschluss 4 an ein Kupplungsstück 6 angesetzt wird, das mit dieser Sauganlage verbunden ist. Ein ölabscheiderseitiger Anschluss ist bei diesem Ausführungsbeispiel als Rohrstutzen 8 ausgebildet, an dessen Außenumfang eine Vielzahl von axial beabstandeten Rückhalteringen 10 ausgebildet ist. Auf diesen Rohrstutzen 8 wird dann mit Presspassung ein Wellrohr oder eine sonstige Leitung aufgeschoben, über die der zulaufseitige Teil der Heizeinheit 2 mit dem Ausgang des Ölabscheiders oder des Druckregelventils verbunden ist. Die Rückhalteringe 10 verhindern ein unerwünschtes Abrutschen des Wellrohrs. Statt des Rohrstutzens 8 mit Rückhalteringen 10 kann auch eine Kupplungsverbindung vorgesehen sein.

Die beiden Anschlüsse 4, 8 sind an einem rohrkrümmerartigen Gehäuse 12 ausgebildet, an das ein Aufnahmegehäuse 14 für Heizelemente, im vorliegenden Fall PTC-Widerstandselemente ausgebildet ist. Diese sind thermisch mit der Umfangswandung des Gehäuses 12 kontaktiert, so dass der Einmündungsbereich der Blowby-Leitung in den Saugtrakt erwärmt ist und die genannte Vereisung nicht auftreten kann. Die Kontaktierung der im Aufnahmegehäuse 14 aufgenommenen PTC-Widerstandselemente erfolgt über Stromzuführungen, die in einer Steckeraufnahme 18 eines Steckerteils 16 angeordnet sind. Die elektrische Kontaktierung mit dem Bordnetz des Fahrzeugs erfolgt über einen Stecker 20, der mit einem Kontaktabschnitt 22 formschlüssig in die Steckeraufnahme 18 eingesetzt wird. Diese elektrische Kontaktierung kann erfindungsgemäß jedoch erst dann erfolgen, wenn die Heizeinheit 2 bestimmungsgemäß mit dem Kupplungsstück 6 verbunden ist. Dieses ist im Einmündungsbereich der Blowby-Leitung an die Sauganlage, beispielsweise das Ansaugrohr oder Reinluftrohr angesetzt und hat eine Kuppelmanschette 24, in die der Anschluss 4 dichtend eintaucht. Von der kreisringförmigen Kuppelmanschette 24 erstrecken sich hin zur Heizeinheit 2 zwei Halteschalenabschnitte 26, 28, in denen jeweils eine Rastausnehmung 30, 32 ausgebildet ist.

An einer radial vorspringenden Ringschulter 34 des Gehäuses 12 sind zwei in etwa achsparallel zum Anschluss 4 verlaufende Federschenkel 36, 38 ausgebildet, an deren Außenfläche jeweils eine Rastnase 40, 42 ausgebildet ist, die beim Einsetzen der Heizeinheit 2 in das Kupplungsstück 6 in die Rastausnehmungen 30, 32 einrasten. Die Einschubtiefe ist dabei durch an den Enden der Federschenkel 36, 38 ausgebildete Anschläge 44, 46 begrenzt, die auf die Ringstirnflächen 48, 50 der Halteschalen 26, 28 auflaufen. In dieser Kuppelposition liegt der Anschluss 4 mit seiner Stirnseite an einer ringförmigen Stützfläche 52 der Kupplungsmanschette 24 an.

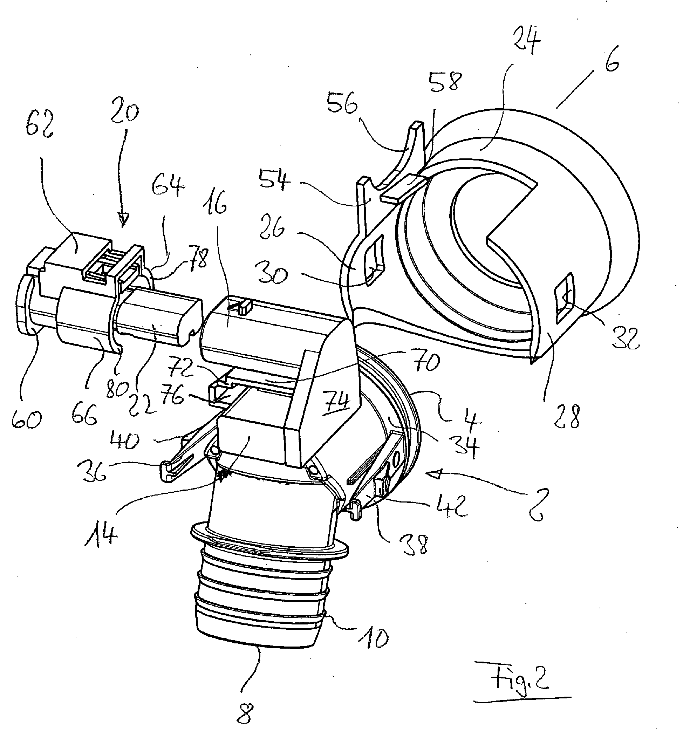

Figur 2 zeigt die Blowby-Heizeinrichtung 1 gemäß Figur 1 aus einem etwas anderen Blickwinkel. In dieser Ansicht erkennt man, dass an eine Längskante der Halteschale 26 ein Sperrelement 54 mit einer konkaven Ausnehmung 56 angesetzt ist. An der zur anderen Halteschale 28 weisenden Innenumfangsfläche des Sperrelementes 54 ist ein schräg zur Kupplungsachse angestellter Mitnehmer 58 ausgebildet, der eine im Folgenden noch näher erläuterte Einlaufschräge bildet. Bei der dargestellten Variante ist dieser Mitnehmer 58 als flacher Rechteckvorsprung ausgebildet.

In der Darstellung gemäß Figur 2 sieht man auch den Aufbau des Steckers 20 mit dem Kontaktabschnitt 22, der in die Steckeraufnahme 18 (siehe Figur 1) des Steckerteils 16 eingesetzt wird. Der Stecker 20 hat einen rückseitigen, vom Kontaktabschnitt 22 beabstandeten Anschlussflansch 60, der von einem nicht dargestellten Anschlusskabel durchsetzt ist. Auf den Stecker ist ein Anschlussteil 62 aufgesetzt oder an diesem angeformt, das einen in Verlängerung des Kontaktabschnittes 22 ausgebildeten Bereich des Steckers 20 mit zylinderförmig gewölbten Schalensegmenten 64, 66 im Abstand umgreift.

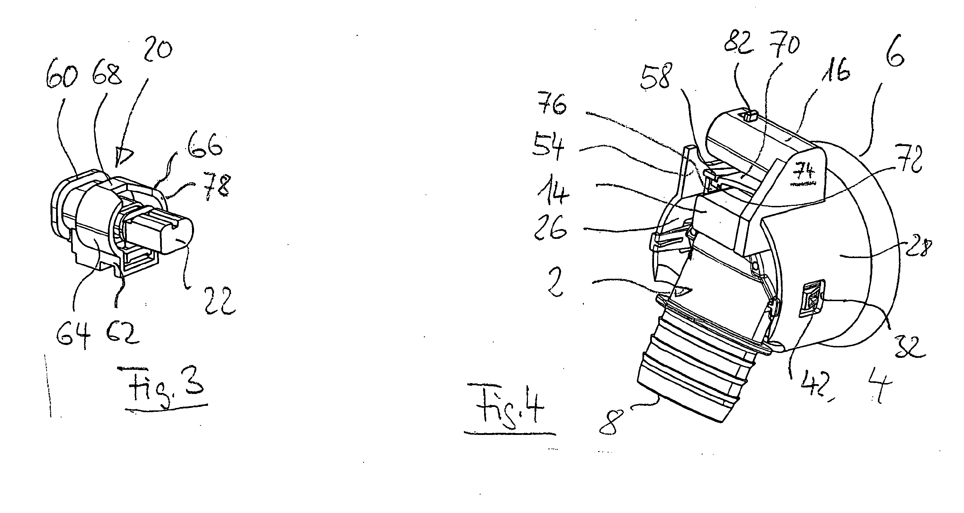

Figur 3 zeigt eine Einzeldarstellung des Steckers gemäß Figur 2 in einer Ansicht von unten her. Man erkennt die beiden Schalensegmente 64, 66, die den sich an den Kontaktabschnitt 22 anschließenden Bereich des Steckers 20 abschnittsweise umgreifen. Zum Anschlussflansch 60 hin sind die Schalensegmente 64, 66 über einen Steg 68 miteinander verbunden.

Unterhalb des Steckerteils 16 (Ansicht nach Figur 2) ist an dem Aufnahmegehäuse 14 der Heizeinheit 2 eine in Richtung zum Stecker hin auskragende Federzunge 70 ausgebildet, deren Endabschnitt 72 L-förmig abgewinkelt ist. Diese Federzunge 70 kragt aus einer rückseitigen Stützwandung 74 aus und ist nach unten, weg vom Steckerteil 16 elastisch auslenkbar. Die elastische Auslenkung ist durch Auflaufen des angewinkelten Endabschnittes 72 auf einen Anschlag 76 (siehe auch Figuren 4-6) begrenzt, so dass die Federzunge 70 nicht überlastet werden kann.

Würde man nun den Stecker 20 zur Kontaktierung der PTC-Widerstandselemente in das Steckerteil 16 einsetzen, ohne dass die Heizeinheit 2 fluiddicht mit dem ansaugseitigen Kupplungsstück 6 verbunden ist, so würden die Schalensegmente 64, 66 mit ihren Ringstirnflächen 78 bzw. 80 auf den angewinkelten Endabschnitt 72 der Zunge 70 auflaufen - der Kontaktabschnitt 22 könnte dann nicht vollständig in die Steckeraufnahme 18 eingeschoben werden - es erfolgt keine Kontaktierung. D.h. in dem Fall, in dem der Monteur bei der Wartung vergisst, die Heizeinheit 2 an das Kupplungsstück 6 anzusetzen, würde auch keine elektrische Kontaktierung dieser Heizeinheit 2 erfolgen, so dass über eine On-Bord-Diagnose (OBD) die fehlerhafte Anbindung der Heizeinheit 2 in den Blowby-Gasströmungspfad erkannt werden kann. Diese On-Bord-Diagnose kann beispielsweise dadurch erfolgen, dass bei jedem Motorstart geprüft wird, ob die Heizeinheit 2 funktioniert. Dies kann durch eine kurze Bestromung und Widerstandsmessung erfolgen. Im Fall einer nicht vorhandenen Kontaktierung wird dann eine Fehlermeldung ausgegeben, so dass die fehlerhafte Montage rechtzeitig erkannt und beseitigt werden kann.

Zur ordnungsgemäßen Montage muss bei der erfindungsgemäßen Lösung zunächst die Heizeinheit 2 in der in Figur 4 dargestellten Weise in das Kupplungsstück 6 eingesetzt werden. Dazu wird der mit dem Anschluss 4 ausgeführte Stutzen des Gehäuses 12 in die Kupplungsmanschette 24 eingeschoben, wobei dann ein Teilbereich der Heizeinheit 2 in den Raum zwischen den beiden Halteschalen 26, 28 eintaucht. Dabei läuft - wie in Figur 4 sichtbar - der als Auflaufschräge ausgebildete Mitnehmer 58 auf den Endabschnitt 72 der Federzunge 70 auf, wobei der Mitnehmer 58 und das angewinkelte Endstück 72 einander überlappen, so dass die Federzunge 70 in der Ansicht gemäß Figur 4 nach unten ausgelenkt wird. Diese Auslenkung ist so gewählt, dass der Einschubbereich für den Stecker 20, insbesondere für die Schalensegmente 64, 66 freigegeben wird. Beim Erreichen der vorbestimmten Sollposition (Figur 4) schnappen die beiden Rastnasen 40, 42 in die zugehörigen Aussparungen 32, 30 ein und die angewinkelten Anschläge 44, 46 der Federschenkel 36, 38 liegen an den Ringstirnflächen der beiden Halteschalen 26, 28 an. Demnach ist in der in Figur 4 dargestellten Position die Heizeinheit 2 ordnungsgemäß an die Sauganlage angeschlossen.

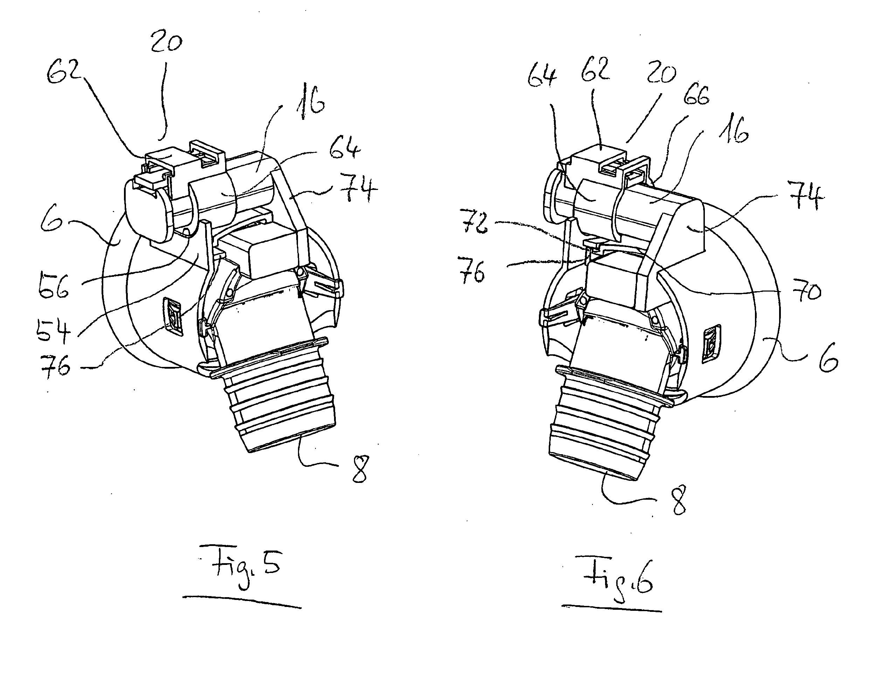

In einem folgenden Montageschritt erfolgt nun noch die elektrische Kontaktierung der Heizeinheit 2. Dies erfolgt gemäß den Figuren 5 und 6 durch Einsetzen des Steckers 20 in das Steckerteil 16. Man erkennt insbesondere aus Figur 6, dass bei diesem Einsetzen die beiden Schalensegmente 64, 66 nicht mit der Federzunge 70 kollidieren und im eingeschobenen Zustand den Außenumfang des Steckerteils 16 als Sicherung abschnittsweise umgreifen, wobei eine an diesem ausgebildete Rastnase (siehe Figur 4) 82 in eine entsprechende Aufnahme des Anschlussteils 62 einrastet, so dass ein versehentliches Lösen des Steckers 20 von der Heizeinheit 2 nahezu ausgeschlossen ist. Die seitliche Fixierung des Steckers 20 mit Bezug zum Steckerteil 16 übernehmen dabei die beiden Schalensegmente 64, 66. Wie insbesondere Figur 5 entnehmbar ist, sitzt dann der Stecker 20 mit einem Teilbereich der Schalensegmente 64, 66 auf der Umfangskante der Ausnehmung 56 des Sperrelementes 54 auf, so dass die Heizeinheit 2 aufgrund des formschlüssigen Eingriffs des Steckers 20 nicht vom Kupplungsstück 6 gelöst werden kann. Dieses Lösen ist erst dann möglich, wenn der Stecker 20 abgezogen wird oder sich löst - dies würde allerdings dann über die OBD detektiert werden, falls dieses Lösen unbeabsichtigt erfolgt.

Mit dem erfindungsgemäßen Konzept ist eine ordnungsgemäße Anbindung der Heizeinheit 2 an einen Blowby-Gasströmungspfad gewährleistet, wobei eine fehlerhafte Montage aufgrund der nicht möglichen Kontaktierung der Heizeinheit auf einfache Weise erkannt werden kann. Die Erfindung ist allerdings keinesfalls auf die Positionierung der Heizeinheit 2 im Bereich der Sauganlage beschränkt. Prinzipiell kann diese auch an anderen geeigneten Positionen des Blowby-Gasströmungspfades angeordnet werden.

Die vorbeschriebene Blowby-Heizeinrichtung stellt eine sogenannte "Kaltlandvariante" für Länder mit vergleichsweise niedrigen Temperaturen dar. Falls das Fahrzeug ausschließlich oder weit überwiegend in Ländern mit vergleichsweise mildem Klima eingesetzt wird, beispielsweise in Südeuropa, kann unter Umständen auf eine derartige Einleitstellenheizung verzichten werden. Bei einem derartigen System wird dann anstelle der Heizeinheit 2 ein "Dummy" eingesetzt, der beispielsweise durch ein Kunststoffteil mit einer elektrischen "Durchschleifung" gebildet ist. Diese kann über einen Widerstand erfolgen. Die Funktionalität des Systems bleibt im Prinzip jedoch erhalten, d.h., das nicht ordnungsgemäße Ansetzen dieses "Dummys" an das Kupplungsstück ist durch den dann unterbrochenen elektrischen Kreis in der oben beschriebenen Weise detektierbar. Messbar ist dann beispielsweise ein Stromfluss (kein Stromfluss: nicht gesteckt; Stromfluss: korrekte Montage) oder auch ein ohmscher Widerstand (Widerstand gegen unendlich: nicht gesteckt; Widerstand definiert: korrekte Montage) - die Funktionalität der "Kaltlandvariante" und der "Warmlandvariante" ist somit im Hinblick auf die Detektierbarkeit identisch.

Wie bereits eingangs erwähnt, ist die Erfindung allgemein bei Fluidleiteinrichtungen einsetzbar, bei denen der Fluidstrom in einer Anwendung mittels einer Heizeinheit beheizt wird und in einer anderen Anwendung keine Heizeinheit vorgesehen ist.

Offenbart ist eine Fluidleiteinrichtung, insbesondere eine Blowby-Einrichtung mit einer elektrisch leitenden Einheit, die an ein Kupplungsstück angesetzt ist und über einen Stecker elektrisch kontaktiert wird. Erfindungsgemäß kann dieser Stecker nur dann angesetzt werden, wenn die elektrisch leitende Einheit ordnungsgemäß an das Kupplungsstück angesetzt ist.

### Bezugszeichenliste:

- 1: Blowby-Heizeinrichtung
- 2: Heizeinheit
- 4: Anschluss
- 6: Kupplungsstück
- 8: Rohrstutzen
- 10: Rückhaltering
- 12: Gehäuse
- 14: Aufnahmegehäuse
- 16: Steckerteil
- 18: Steckeraufnahme
- 20: Stecker
- 22: Kontaktabschnitt
- 24: Kupplungsmanschette
- 26: Halteschale
- 28: Halteschale
- 30: Rastausnehmung
- 32: Rastausnehmung
- 34: Ringschulter
- 36: Federschenkel
- 38: Federschenkel
- 40: Rastnase
- 42: Rastnase
- 44: Anschlag
- 46: Anschlag
- 48: Stirnfläche
- 50: Stirnfläche
- 52: Stützfläche
- 54: Sperrelement
- 56: Ausnehmung
- 58: Mitnehmer
- 60: Anschlussflansch
- 62: Anschlussteil
- 64: Schalensegment
- 66: Schalensegment
- 68: Steg
- 70: Federzunge
- 72: Endabschnitt
- 74: Stützwand
- 76: Anschlag
- 78: Ringstirnfläche
- 80: Ringstirnfläche
- 82: Rastnase

## Patentansprüche

1. Fluidleiteinrichtung, insbesondere Blowby-Einrichtung mit zumindest einer stromleitenden Einheit, die mittels eines Steckers (20) elektrisch kontaktiert ist, der in ein Steckerteil (16) der Einheit (2) eingesetzt ist, mit einem zuströmseitigen und einem abströmseitigen Anschluss zum Anschließen an einen Fluidströmungspfad, wobei einem Anschluss (4) ein Kupplungsstück (6) zugeordnet ist, das in einer eine bestimmungsgemäße Funktion ermöglichenden Sollposition ein Sperrteil (54) in eine Freigabeposition bewegt oder in dieser Freigabeposition hält, in der der Stecker (20) in eine Steckeraufnahme (18) des Steckerteils (16) einsetzbar ist, und das in einer von der Sollposition abweichenden Position das Sperrteil (54) frei gibt, so dass dieses in seine Sperrstellung zurück bewegbar ist.

2. Fluidleiteinrichtung nach Patentanspruch 1, wobei die Einheit eine Heizeinheit (2) mit zumindest einem Heizelement oder eine eine elektrische Verbindung herstellende Durchschleifungseinheit ist.

3. Fluidleiteinrichtung nach Patentanspruch 1 oder 2, wobei das Sperrteil (54) durch eine an der Heizeinheit (2) im Bereich des Steckerteils (16) angeordnete Federzunge (70) gebildet ist, die durch einen Mitnehmer (58) am Kupplungsstück (6) in der Sollposition elastisch in Richtung einer Freigabeposition ausgelenkt ist.

4. Fluidleiteinrichtung nach Patentanspruch 3, wobei der Federzunge (70) ein die Auslenkung begrenzender Anschlag (76) zugeordnet ist.

5. Fluidleiteinrichtung nach einem der Patentansprüche 2 bis 4, wobei der Mitnehmer (58) als ein am Kupplungsstück (6) in Kuppelrichtung schräg angestellter Vorsprung ausgebildet ist, der mit einem Endabschnitt (72) der Federzunge (70) überlappt und diesen beim Ansetzen an das Kupplungsstück (6) in Richtung seiner Freigabeposition bewegt.

6. Fluidleiteinrichtung nach einem der vorhergehenden Patentansprüche, wobei das Kupplungsstück (6) mit der Einheit (2) verrastet ist.

7. Fluidleiteinrichtung nach einem der vorhergehenden Patentansprüche, wobei der Stecker (20) einen Anschlag hat, der in der Sperrstellung auf die Federzunge (70) vor Herstellen der elektrischen Kontaktierung aufläuft.

8. Fluidleiteinrichtung nach Patentanspruch 7, wobei der Anschlag durch Ringstirnflächen (78, 80) des Steckers (20) ausgebildet ist.

9. Fluidleiteinrichtung nach einem der vorhergehenden Patentansprüche, wobei das Kupplungsstück (6) und der Stecker (20) in ihrer Sollposition eine Hinterschneidung ausbilden, die ein Lösen des Kupplungsstücks (6) von der Heizeinheit (2) unterbindet.

10. Fluidleiteinrichtung nach Patentanspruch 9, wobei das Kupplungsstück (6) eine quer oder schräg zur Kupplungsachse verlaufende Ausnehmung (56) hat, in die der Stecker (20) abschnittsweise eintaucht.

11. Fluidleiteinrichtung nach einem der vorhergehenden Patentansprüche, wobei das Kupplungsstück (6) sauganlagenseitig und der weitere Anschluss (8) motorseitig, vorzugsweise ölabscheiderseitig ausgebildet ist.

12. Fluidleiteinrichtung nach einem der vorhergehenden Patentansprüche, wobei der weitere Anschluss als Rohrstutzen (8) zum Ansetzen einer Fluidleitung, insbesondere einer Blowby-Gasleitung, beispielsweise eines Wellrohrs ausgeführt ist.

13. Fluidleiteinrichtung nach Patentanspruch 2, erste Alternative, oder einem der auf diesen rückbezogenen Patentansprüche, wobei das Heizelement ein PTC-Widerstandselemente ist.

## Claims

1. A fluid guidance device, in particular a blow-by device, comprising at least one current-conducting unit that is electrically contacted by means of a plug (20) which is inserted into a plug portion (16) of the unit (2), comprising a connector on the inflow side and a connector on the outflow side for connection to a fluid flow path, there being assigned to a connector (4) a coupling piece (6) that, in a desired position that makes correct function possible, moves a blocking part (54) into a release position or holds it in this release position in which the plug (20) can be inserted into a plug receptacle (18) of the plug portion (16) and that, in a position different from the desired position, releases the blocking part (54) so that the latter can be moved back into its blocking position.

2. The fluid guidance device according to Claim 1, the unit being a heating unit (2) with at least one heating element or a loop-through unit establishing an electrical connection.

3. The fluid guidance device according to Claim 1 or 2, the blocking part (54) being formed by a flexible tongue (70) disposed on the heating unit (2) in the region of the plug portion (16) and which is deflected elastically towards a release position by a driver (58) on the coupling piece (6) in the desired position.

4. The fluid guidance device according to Claim 3, a stop (76) limiting the deflection being assigned to the flexible tongue (70).

5. The fluid guidance device according to any of Claims 2 to 4, the driver (58) being made in the form of a projection positioned at an angle on the coupling piece (6) in the coupling direction and which overlaps with an end section (72) of the flexible tongue (70) and moves the latter towards its release position when placed against the coupling piece (6).

6. The fluid guidance device according to any of the preceding claims, the coupling piece (6) being locked to the unit (2).

7. The fluid guidance device according to any of the preceding claims, the plug (20) having a stop that runs onto the flexible tongue (70) in the blocking position before establishing the electrical contacting.

8. The fluid guidance device according to Claim 7, the stop being formed by annular face surfaces (78, 80) of the plug (20).

9. The fluid guidance device according to any of the preceding claims, the coupling piece (6) and the plug (20) forming an undercut in their desired position which prevents release of the coupling piece (6) from the heating unit (2).

10. The fluid guidance device according to Claim 9, the coupling piece (6) having a recess (56) running transversely or at an angle to the coupling axis into which the plug (20) is partially plunged.

11. The fluid guidance device according to any of the preceding claims, the coupling piece (6) being formed on the suction unit side and the other connector (8) being formed on the motor side, preferably on the oil separator side.

12. The fluid guidance device according to any of the preceding claims, the additional connector being in the form of a pipe support (8) for the positioning of a fluid pipeline, in particular a blow-by gas pipeline, for example a corrugated pipe.

13. The fluid guidance device according to Claim 2, first alternative, or any of the claims relating back to the latter, the heating element being a PTC resistor element.

## Revendications

1. Dispositif d'acheminement de fluide, plus particulièrement dispositif blowby avec au moins une unité conductrice de courant, qui est mise en contact électriquement à l'aide d'une prise mâle (20), qui est insérée dans une partie de prise mâle (16) de l'unité (2), avec un raccord du côté de l'afflux et un du côté de l'écoulement pour raccordement à un trajet d'écoulement de fluide, dans lequel une pièce de couplage (6) est affectée à un raccordement (4) qui, dans une position théorique permettant une fonction en conformité avec sa spécification, déplace une pièce de blocage (54) dans une position de relâchement ou la maintient dans cette position de relâchement, dans laquelle la prise mâle (20) peut être insérée dans un logement de prise mâle (18) de la pièce de prise mâle (16), et qui relâche la pièce de blocage (54) dans une position s'écartant de la position théorique, de sorte que celle-ci peut être déplacée en retour dans sa position de blocage.

2. Dispositif d'acheminement de fluide selon la revendication 1, dans lequel l'unité est une unité de chauffage (2) avec au moins un élément de chauffage ou une unité de boucle produisant une liaison électrique.

3. Dispositif d'acheminement de fluide selon la revendication 1 ou 2, dans lequel la pièce de blocage (54) est formée par une lame de ressort (70) disposée sur l'unité de chauffage (2) dans la zone de la pièce de prise mâle (16), qui, dans la position théorique, est inclinée de façon élastique dans le sens d'une position de relâchement par un toc d'entraînement (58) situé sur la pièce de couplage (6).

4. Dispositif d'acheminement de fluide selon la revendication 3, dans lequel une butée (76) limitant l'inclinaison est affectée à la lame de ressort (70).

5. Dispositif d'acheminement de fluide selon l'une des revendications 2 à 4, dans lequel le toc d'entraînement (58) est conçu comme une partie en saillie mise en place obliquement sur la pièce de couplage (6) dans le sens de couplage, qui chevauche avec une section d'extrémité (72) de la lame de ressort (70) et déplace celle-ci dans le sens de sa position de relâchement lors de la mise en place sur la pièce de couplage (6).

6. Dispositif d'acheminement de fluide selon l'une des revendications précédentes, dans lequel la pièce de couplage (6) est verrouillée avec l'unité (2).

7. Dispositif d'acheminement de fluide selon l'une des revendications précédentes, dans lequel la prise mâle (20) a une butée qui, dans la position de blocage, se heurte sur la lame de ressort (70) avant de produire la mise en contact électrique.

8. Dispositif d'acheminement de fluide selon la revendication 7, dans lequel la butée est conçue par des surfaces frontales annulaires (78, 80) de la prise mâle (20).

9. Dispositif d'acheminement de fluide selon l'une des revendications précédentes, dans lequel la pièce de couplage (6) et la prise mâle (20) constituent dans leur position théorique une contre-dépouille qui empêche un desserrement de la pièce de couplage (6) de l'unité de chauffage (2).

10. Dispositif d'acheminement de fluide selon la revendication 9, dans lequel la pièce de couplage (6) a un évidement (56) passant transversalement ou obliquement à l'axe de couplage, dans lequel la prise mâle (20) s'enfonce par sections.

11. Dispositif d'acheminement de fluide selon l'une des revendications précédentes, dans lequel la pièce de couplage (6) est conçue du côté du dispositif d'aspiration et l'autre raccordement (8) du côté du moteur, de préférence du côté du séparateur d'huile.

12. Dispositif d'acheminement de fluide selon l'une des revendications précédentes, dans lequel l'autre raccordement est réalisé comme une tubulure (8) pour la mise en place d'une conduite de fluide, en particulier d'une conduite de gaz blowby, par exemple, d'un tube ondulé.

13. Dispositif d'acheminement de fluide selon la revendication 2, première alternative, ou l'une des revendications renvoyant à celle-ci, dans lequel l'élément de chauffage est un élément de résistance à coefficient positif de température.
